(19) Europäisches Patentamt
European Patent Office
Office européen des brevets

(11) EP 2 159 046 B1

(12) **EUROPEAN PATENT SPECIFICATION**

(45) Date of publication and mention
of the grant of the patent:
**14.05.2014 Bulletin 2014/20**

(21) Application number: **08764896.0**

(22) Date of filing: **30.05.2008**

(51) Int Cl.:
*B32B 15/08* (2006.01)   *B65D 1/00* (2006.01)
*B65D 1/12* (2006.01)   *C09J 133/00* (2006.01)
*C09J 201/02* (2006.01)   *C23C 22/00* (2006.01)

(86) International application number:
**PCT/JP2008/059978**

(87) International publication number:
**WO 2008/149787 (11.12.2008 Gazette 2008/50)**

(54) **RESIN-COATED METAL SHEET AND FORMED OBJECT MADE THEREFROM**

HARZBESCHICHTETES METALLBLECH UND DARAUS HERGESTELLTER FORMKÖRPER

FEUILLE MÉTALLIQUE REVÊTUE DE RÉSINE ET OBJET OBTENU À PARTIR DE LADITE FEUILLE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.05.2007 JP 2007144409**

(43) Date of publication of application:
**03.03.2010 Bulletin 2010/09**

(73) Proprietor: **Toyo Seikan Kaisha, Ltd.**
**Tokyo 100-8522 (JP)**

(72) Inventors:
• **TADAKI, Yasufumi**
**Yokohama-shi**
**Kanagawa 230-0001 (JP)**

• **ICHINOSE, Syozo**
**Yokohama-shi**
**Kanagawa 230-0001 (JP)**

(74) Representative: **Vossius & Partner**
**Siebertstrasse 4**
**81675 München (DE)**

(56) References cited:
**WO-A1-2007/029755   WO-A1-2007/029755**
**JP-A- 05 170 845   JP-A- 2001 348 535**
**JP-A- 2001 348 535   JP-A- 2001 348 674**
**JP-A- 2001 348 674   JP-A- 2004 218 072**
**JP-A- 2006 520 402   JP-A- 2006 520 402**
**JP-A- 2008 183 523   JP-A- 2008 184 557**
**JP-B2- 56 033 468**

**Description**

TECHNICAL FIELD

The present invention relates to a resin-coated metal sheet which is manufactured by forming a surface treatment film on at least one side of a metal substrate and by forming an organic resin film layer on the surface of the metal substrate, and more particularly to a resin-coated metal sheet having excellent corrosion resistance and excellent adhesiveness in which a surface of an aluminum substrate is coated with an organic resin film layer by way of an adhesive layer which contains a cationic-group containing resin and a water-based resin.

BACKGROUND ART

In manufacturing formed bodies such as can bodies or can lids used as beverage cans or the like, a metal sheet such as an aluminum sheet is used. Although aluminum exhibits excellent formability and excellent flavor keeping property as a can body material and can lid material, aluminum has a drawback that aluminum exhibits less corrosion resistance compared to a surface-treated steel material.

On the other hand, a chromate-based chemical conversion treatment agent has been used for applying surface treatment to the aluminum sheet. A chromate-based chemical conversion treatment film formed on the aluminum sheet by the chromate-based chemical conversion treatment agent exhibits the excellent corrosion resistance even when used alone and also exhibits excellent corrosion resistance and adhesiveness even after various resin-based coating materials is applied to the chromate-based chemical conversion treatment film. Accordingly, the chromate-based chemical conversion treatment film has been used in a broad range of applications including architectural materials, electrical appliance for household use, fin materials, vehicle-use evaporators, beverage can materials and the like (see patent document 1).

However, the chromate-based chemical conversion treatment agent uses hexavalent chromium which is harmful to humans in a surface treatment step and hence, recently, from a viewpoint of protection of environment, the use of chromate-based chemical conversion treatment agent has difficulty in operability and a waste liquid produced after treatment. Accordingly, there has been a demand for a non-chromium surface treatment agent which can impart high corrosion resistance and adhesiveness substantially equal to corrosion resistance and adhesiveness brought about by the chromate-based chemical conversion treatment agent to the aluminum sheet.

As such a surface treatment agent, for example, patent document 2 discloses a metal surface treatment method in which a surface of a metal material is treated with a metal surface treatment agent which contains at least one kind of vanadium compound (A), metal compound (B) which contains at least one kind of metal selected from a group consisting of cobalt, nickel, zinc, magnesium, aluminum, calcium, strontium, barium and lithium, and a water-soluble polymer and/or an aqueous emulsion resin when necessary. Such a metal surface treatment method imparts the excellent corrosion resistance and the excellent alkali resistance to a surface of a sheet coil or a formed product which is made of metal, provides the excellent interlayer adhesiveness between a resin layer formed by coating or lamination and a metal material, and forms a film which does not contain chromium.

However, the non-chromium-based metal surface treatment composition disclosed in patent document 2 is less than optimal with respect to the corrosion resistance after lamination forming and, further, there also exists a drawback that it is difficult to suppress the generation of aluminum sludge when aluminum is used as a material of the metal substrate.

Further, in the manufacture of can bodies or can lids, there has been adopted a method which forms a thermoplastic resin coated metal sheet which is coated with a film made of a thermoplastic resin such as a polyester film. Such a thermoplastic resin has small functional groups compared to a coating material and hence, the thermoplastic resin exhibits small adhesiveness whereby a background layer for the thermoplastic resin is required to exhibit the large adhesiveness.

For example, with respect to an easy-to-open lid (EOE) coated with a polyester film, feathering is generated at the time of opening a can and hence, primer coating is necessary to ensure the adhesiveness resulting in the increase of the number of steps. Further, with respect to a two-piece can which is formed by applying drawing, stretch drawing or ironing to a metal substrate, there has been a demand for the enhancement of adhesiveness which can withstand a can mold for severer forming.

Conventional surface treatment such as chromate-based surface treatment disclosed in patent document 1 and the non-chromium-based surface treatment disclosed in patent document 2 fail to realize such enhancement of adhesiveness. There has been a demand for the enhancement of the adhesiveness.

[Patent document 1] JP-A-5-125555
[Patent document 2] JP-A-2004-183015

DISCLOSURE OF THE INVENTION

TASK TO BE SOLVED BY THE INVENTION

The present invention has been made to overcome these drawbacks which the prior art possesses. To be more specific, it is an object of the present invention to provide a resin-coated metal sheet which has a chromium-free surface treatment layer and has a coating film formed by applying an organic resin, and which exhibits favorable corrosion resistance even after being subject to severe forming such as deep drawing, drawing and ironing, or stretch drawing after the formation of an organic resin film layer. Further, even when the resin-coated metal sheet is formed into a formed body such as a can body or a can lid, the resin-coated metal sheet can exhibit excellent adhesiveness with the organic resin film layer and can exhibit the excellent corrosion resistance.

It is another object of the present invention to provide a formed body which is formed of a resin-coated aluminum alloy sheet which exhibits favorable corrosion resistance even when the formed body is formed by applying severe forming after forming a coating film using a coating material or covering the formed body with an organic resin without using chromium on a surface treatment layer, and exhibits excellent adhesiveness with the coating film or an organic resin film and excellent corrosion resistance at the time of forming the formed body.

MEANS FOR OVERCOMING DRAWBACKS

(1) The resin-coated metal sheet of the present invention includes: an aluminum substrate having a surface treatment film on at least one side thereof; and an organic resin film layer formed on the surface of the aluminum substrate by coating by way of an adhesive layer, wherein the adhesive layer contains a cationic-group containing resin and a water-based resin.

(2) The resin-coated metal sheet of the present invention having the above-mentioned constitution (1) is **characterized in that** the cationic-group containing resin contains not less than 5.0meq/g of cationic group in a resin solid content thereof.

(3) The resin-coated metal sheet of the present invention having the above-mentioned constitution (1) or (2) is **characterized in that** the cationic-group containing resin is polyallylamine and/or polylysine.

(4) The resin-coated metal sheet of the present invention having any one of the above-mentioned constitutions (1) to (3), wherein the water-based resin includes at least one of an acrylic resin, a urethane resin, a polyester resin, a phenol resin and an epoxy resin.

(5) The resin-coated metal sheet of the present invention having the above-mentioned constitution (4) is **characterized in that** the acrylic resin is an oxazoline-group containing acrylic resin which contains at least two oxazoline-groups in one molecule thereof.

(6) The resin-coated metal sheet of the present invention having any one of the above-mentioned constitutions (1) to (5) is **characterized in that** the surface treatment film is a chemical conversion treatment film.

(7) The resin-coated metal sheet of the present invention having the above-mentioned constitution (6) is **characterized in that** the chemical conversion treatment film is an organic/inorganic chemical conversion treatment film.

(8) The resin-coated metal sheet of the present invention having the above-mentioned constitution (7) is **characterized in that** the organic/inorganic chemical conversion treatment film includes 2mg/m$^2$ to 100mg/m$^2$ of zirconium in terms of metal atoms and a polyitaconic acid.

(9) The resin-coated metal sheet of the present invention having the above-mentioned constitution (7) or (8) is **characterized in that** the organic/inorganic chemical conversion treatment film includes 0.5mg/m$^2$ to 20mg/m$^2$ of organic carbon derived from a polyitaconic acid in terms of organic carbon content.

(10) The resin-coated metal sheet of the present invention having any one of the above-mentioned constitutions (1) to (9) is **characterized in that** the organic resin film layer is a polyester film.

(11) The formed body of the present invention is characterized by being formed using the resin-coated metal sheet having any one of the constitutions (1) to (10).

(12) The formed body of the present invention having the constitution (11) is **characterized in that** the formed body is a can body.

(13) The formed body of the present invention having the constitution (11) is **characterized in** that the formed body is a can lid.

ADVANTAGES OF THE INVENTION

The resin-coated metal sheet of the present invention exhibits excellent adhesiveness between the metal substrate and the resin layer and excellent corrosion resistance even when the resin-coated metal sheet is subject to severe forming such as deep drawing, drawing and ironing or stretch drawing thereto or even when the resin-coated metal sheet is formed into a formed body such as a can body or a can lid. The resin-coated metal sheet of the present invention possesses properties equal to or more than properties of a conventional resin-coated metal sheet which is treated with a phosphoric acid chromate treatment agent.

BEST MODE FOR CARRYING OUT THE INVENTION

The resin-coated metal sheet of the present invention includes: a metal substrate having a surface treatment film on at least one side thereof; and an organic resin film layer formed on the surface treatment film by way of an adhesive layer, wherein the adhesive layer contains a cationic-group containing resin and a water-based resin. Hereinafter, embodiments of the resin-coated metal sheet of the present invention and a formed body formed using the resin-coated metal sheet are explained sequentially.

(Metal substrate)

As the metal substrate which becomes a base of the resin-coated metal sheet, various kinds of can-material-use thin plates are applicable. However, from a viewpoint of easiness in acquiring advantageous effects of the present invention, it is preferable to use an aluminum sheet having the following composition. That is, in terms of % by mass, the metal substrate contains 0.2 to 5.5% by mass of Mg, 0.05 to 1% by mass of Si, 0.05 to 1% by mass of Fe, 0.01 to 0.35% by mass of Cu, 0.01 to 2% by mass of Mn, 0.01 to 0.4% by mass of Cr and Al as a balance. The percentage of the above-mentioned composition is set as described above due to the following reasons.
Mg is added to increase the strength of the metal substrate. The reason that the content of Mg is limited to 0.2 to 5.5% by mass is that the desired strength cannot be obtained when the content of Mg is less than 0.2% by mass, and edge cracks are increased at the time of rolling when the content of Mg exceeds 5.5% by mass.
Si and Fe are added to improve the formability. The reason that the content of Si is limited to 0.05 to 1% by mass and the content of Fe is limited to 0.05 to 1% by mass is as follows. That is, both components are unavoidably included as components of the metal substrate so that it is difficult to restrict the content of Si and the content of Fe to less than 0.05% by mass using usual treatment, while when the content of Si or Fe exceeds 1% by mass, macro crystals is liable to be easily generated in the formability and hence, the formability is deteriorated.
Cu is added to increase the strength of the metal substrate. The reason that the content of Cu is limited to 0.01 to 0.35% by mass is that the strength becomes poor when Cu is not added and cracks occur at the time of casting when the content of Cu exceeds an upper limit.
Mn and Cr are added to increase strength and heat resistance. Mn and Cr are added also to enhance a limit drawing ratio and to form crystal particles into microstructure. The reason that the content of Mn is limited to 0.01 to 2% by mass and the content of Cr is limited to 0.01 to 0.4% by mass is that when the contents of Mn and Cr are less than lower limits, the above-mentioned advantageous effects are small, while when the contents of Mn and Cr exceeds upper limits, the limit drawing ratio is decreased thus giving rise to the occurrence of cracks in a can manufacturing step and a can lid manufacturing step.
As the above-mentioned aluminum substrate, for example, an aluminum alloy material JIS A5182, an aluminum alloy material JIS A5082, an aluminum alloy material JIS A5021, an aluminum alloy material JIS A5022, an aluminum alloy material JIS A5052, an aluminum alloy material JIS A3004, an aluminum alloy material JIS A3005, an aluminum alloy material JIS A3104 or the like are preferably used.
Further, as the above-mentioned aluminum substrate, it is possible to use a clad material which is formed of a core material made of one of the above-mentioned aluminum alloys and a clad material which is formed of a core material having a pure aluminum layer having aluminum purity of 99.5% or more. Further, it is also possible to use a pure aluminum sheet having aluminum purity of 99.5% or more.
In the present invention, it is preferable to use the metal substrate having a thickness of 0.15 to 0.40mm, and more preferably the metal substrate having a thickness of 0.20 to 0.30mm. The reason is as follows. When the thickness of the metal substrate is less than 0.15mm, the can or the can lid cannot be easily formed and, at the same time, cannot acquire desired strength. On the other hand, when the thickness of the metal substrate exceeds 0.40mm, the manufacture of the can or the can lid is deteriorated economically. Although a shape of the aluminum substrate is not particularly limited, the shape of the aluminum substrate is preferably formed into a shape which facilitates the lamination of a film. For example, the aluminum substrate may preferably have a plate shape, a sheet shape or a coil shape.

(Manufacture of resin-coated metal sheet)

In forming a formed body such as a resin-coated aluminum can or a resin-coated aluminum can lid, firstly, the surface-treated metal sheet in which the metal substrate is coated with the metal-surface-treatment composition is manufactured. Then, the resin-coated metal sheet in which a surface of the surface-treated metal substrate is coated with an organic resin layer by way of an adhesive layer is manufactured. Hereinafter, specific steps of the manufacturing method are sequentially explained.

(Surface treated metal sheet)

(Cleaning of metal substrate)

Prior to the manufacture of a surface-treated metal substrate, first of all, rolling-use oil, rust prevention oil and the like are removed (degreased) by cleaning a surface of the metal substrate. A degreasing method is not particularly limited, and may adopt solvent degreasing, alkali degreasing or acidic degreasing used in general. For example, it is preferable to perform a step in which the metal substrate is cleaned with an acid. Further, prior to the above-mentioned acid-cleaning step, it is preferable to perform a step in which the aluminum substrate is cleaned with alkali. The preferable mode is a method which sequentially performs the respective steps in order of alkali cleaning, water cleaning, acid cleaning, water cleaning, surface treatment, water cleaning, pure water cleaning and drying.

The above-mentioned alkali cleaning treatment is not particularly limited. For example, it is possible to perform conventional treatments which are used for alkali cleaning treatment of metal such as aluminum or aluminum alloy. Usually, in the alkali cleaning treatment, the alkali cleaning is performed using an alkaline cleaner. Further, the acid cleaning is performed using an acid cleaner.

The alkaline cleaner and the acid cleaner are not particularly limited, and an alkaline cleaner and an acid cleaner which are used in usual cleaning can be used.

Usually, it is preferable to perform the above-mentioned acid cleaning and the above-mentioned alkali cleaning treatment by a spray method. After performing the above-mentioned acid cleaning or alkali cleaning, for removing the acid cleaning agent or the alkali cleaning agent remaining on a surface of a base material, water cleaning treatment is performed.

(Formation of surface treatment film)

As the surface treatment film used in the present invention, it is possible to use a conventional inorganic chemical conversion treatment film such as a zirconium-based chemical conversion treatment film, a titanium-based chemical conversion treatment film, a vanadium-based chemical conversion treatment film or a molybdenum-based chemical conversion treatment film, a conventional organic/inorganic chemical conversion treatment film such as zirconium/carboxyl-group containing resin-based chemical conversion treatment film, or a conventional electrolytic treatment film such as an anodic oxide film can be used. From a viewpoint of adhesiveness between the surface treatment film and the adhesive layer of the present invention, it is preferable to use the organic/ inorganic chemical conversion treatment film. Organic compound contained in the organic/inorganic chemical conversion treatment film exhibit favorable adhesiveness with the adhesive layer and hence, the organic/inorganic chemical conversion treatment film exhibits the excellent adhesiveness with the thermoplastic resin film having relatively small functional groups by way of an adhesive layer of the present invention, not to mention the adhesiveness with a coating material or a primer having large functional groups.

However, the organic/inorganic chemical conversion treatment has a drawback that aluminum ions generated by etching and an organic compound react with each other thus generating insoluble sludge and such sludge is liable to float in a treatment bath liquid. Further, when the sludge is accumulated on the treatment film and film irregularities occur, there exists a possibility that the adhesiveness between the surface treatment film and an organic resin is largely lowered. To overcome this drawback, it is further desirable to use a low-sludge organic/inorganic chemical conversion treatment film described hereinafter.

The surface treatment is applied to the aluminum substrate in such a manner that the metal surface treatment composition is brought into contact with the surface of the aluminum substrate so as to make the metal surface treatment composition react with the surface of the aluminum substrate thus forming a surface treatment film. This method is not particularly limited provided that the method brings the aluminum substrate into contact with the metal surface treatment composition. For example, ordinary methods such as a spray method and an immersion method can be named. Among these methods, it is preferable to perform the surface treatment of the aluminum substrate by the spray method.

(Low-sludge organic/inorganic chemical conversion treatment film)

The low-sludge chemical conversion treatment film is formed on the surface of the aluminum substrate using the metal surface treatment composition containing a predetermined amount of effective fluorine ions, a predetermined amount of zirconium ions, a predetermined amount of aluminum ions, and a polyitaconic acid. By treating the surface of the aluminum substrate using this metal surface treatment composition, as is well-known to those who are skilled in the art, aluminum is dissolved by fluorine ions and, eventually, pH of the metal surface treatment composition is increased leading to the precipitation of a zirconium compound. It is considered that both an aluminum compound and a polyitaconic acid are precipitated along with the precipitation of zirconium compound so that the surface-treatment film is formed.

In this manner, the surface treatment film which is formed of the zirconium compound, the aluminum compound and a polyitaconic acid includes a carboxyl group based on the polyitaconic acid and hence, the surface treatment film can exhibit the excellent adhesiveness with the resin.

Further, it has been known that when the aluminum substrate is etched by fluorine ions, aluminum ions are supplied to the treatment bath thus generating aluminum sludge. In this embodiment, however, the polyitaconic acid and the aluminum ions interact with each other thus largely suppressing the generation of the sludge.

The reason is considered that a certain interaction exists between the polyitaconic acid and aluminum ions so that aluminum ions are stabilized in the treatment bath due to such an interaction.

When a large quantity of aluminum sludge is generated, the sludge is entangled into the surface-treatment film and hence, uniformity of thickness of the surface-treatment film is lowered thus deteriorating adhesiveness and forming adhesiveness after coating the aluminum substrate with the organic resin.

This is particularly apparent when a coiled sheet-shaped aluminum sheet is subject to continuous surface treatment. That is, to consider a case where a large quantity of sludge is generated in a surface treatment liquid, the sludge is adhered to and accumulated on a surface of a surface treatment liquid removing roll at the time of removing a surface treatment liquid with such a roll, and the accumulated sludge is transferred to the surface of the aluminum sheet thus further increasing the surface film irregularities.

The manufacturing method of the metal surface treatment composition is not particularly limited, and the metal surface treatment composition is prepared by blending effective fluorine ions, zirconium ions, aluminum ions and a polyitaconic acid described below and, thereafter, by adjusting pH of the metal surface treatment composition.

(Metal surface treatment composition)

(Effective fluorine ions)

It is preferable that the above-mentioned metal surface treatment composition contains not less than 1ppm and not more than 1000ppm of fluorine ions in terms of effective fluorine ion content, and it is more preferable that the above-mentioned metal surface treatment composition contains not less than 5ppm and not more than 100ppm of fluorine ions in terms of effective fluorine ion content. Here, "effective fluorine ion" implies the concentration of fluorine ions in a free state in a treatment bath, and the concentration of effective fluorine ions is obtained by measuring the treatment bath by a measuring instrument having a fluorine ion electrode.

When the concentration of effective fluorine ion is less than 1ppm, etching becomes insufficient so that a sufficient zirconium film quantity cannot be obtained and hence, the adhesiveness and the corrosion resistance are lowered. When the concentration of effective fluorine ion is more than 1000ppm, etching is excessive so that the zirconium film is not precipitated and hence, the adhesiveness and the corrosion resistance are lowered.

As a fluorine ion source, besides zirconium fluoride acid compound, it is possible to name a hydrofluoric acid, fluoric ammonium, hydrofluoric acid ammonium, sodium fluoride, hydrofluoric acid sodium or the like. The concentration of effective fluorine ion can be adjusted by using these fluorine ion sources in combination.

(Zirconium ions)

It is preferable that the content of zirconium ions in the above-mentioned metal surface treatment composition is not less than 10ppm and not more than 10000ppm, and it is more preferable that the content of zirconium ions in the above-mentioned metal surface treatment composition is not less than 50ppm and not more than 1000ppm. When the content of zirconium ions is less than 10ppm, the zirconium content in the surface treatment film is small and hence, corrosion resistance is lowered. When the content of zirconium ions in the metal surface treatment composition is more than 10000ppm, the further improvement of properties of the resin-coated aluminum alloy sheet is no more expected and hence, it becomes disadvantageous in terms of a cost.

As a zirconium ion source, a fluoro zirconic acid, a lithium salt, a sodium salt, a potassium salt, an ammonium salt thereof, a zirconium fluoride or the like can be named. Further, a zirconium ion source can be obtained by dissolving zirconium compound such as zirconium oxide into a fluoride aqueous solution such as hydrofluoric acid.

(Aluminum ions)

It is preferable that the content of aluminum ions in the above-mentioned metal surface treatment composition is not less than 10ppm and not more than 2000ppm, and it is more preferable that the content of aluminum ions in the above-mentioned metal surface treatment composition is not less than 50ppm and not more than 500ppm. When the content of aluminum ions is less than 10ppm, a precipitation quantity of polyitaconic acid is decreased so that the metal treatment film having sufficient adhesiveness cannot be obtained. On the other hand, when the content of aluminum ions is more than 2000ppm, a chemical conversion reaction is interrupted so that sludge is generated in a surface treatment bath.

As an aluminum ion source, aluminate such as aluminum hydroxide, aluminum fluoride, aluminum oxide, aluminum sulfate, aluminum nitrate, aluminum silicate or sodium aluminate, or fluoro aluminum such as fluoro aluminum acid sodium or the like can be named.

(Polyitaconic acid)

It is preferable that the content of a polyitaconic acid in the above-mentioned metal surface treatment composition is not less than 50ppm and not more than 10000ppm, and it is more preferable that the content of a polyitaconic acid in the above-mentioned metal surface treatment composition is not less than 100ppm and not more than 1000ppm. When the content of a polyitaconic acid is less than 50ppm, the content of a polyitaconic acid in the surface-treatment film is small and hence, the adhesiveness is lowered. When the content of a polyitaconic acid is more than 10000ppm, the further enhancement of properties of the resin-coated metal sheet cannot be expected, and it becomes disadvantageous in terms of a cost.

As a specific example of polyitaconic acid, an alkali metal salt and/or an ammonium salt of polyitaconic acid can be named. Further, when necessary, polyitaconic acid copolymer having itaconic acid segments such as polyitaconic acid-polymaleic acid copolymer, polyitaconic acid-(metha)acrylic acid copolymer or polyitaconic acid-sulfonic acid copolymer, and an alkali metal salt and/or an ammonium salt of these copolymers can be also used. Molecular weights of the above-mentioned polyitaconic acids are, for example, 260 to 1000000, and preferably 1000 to 70000.

When the polyitaconic acid is copolymer, the content of itaconic acid segments in the copolymer is assumed as an effective component. For example, when the above-mentioned metal surface treatment composition contains 200ppm of polyitaconic acid-polymaleic acid copolymer, and a mass ratio of itaconic acid and maleic acid in the copolymer is 1/1, the content of the polyitaconic acid is assumed to be 100ppm (200ppm×1/2=100ppm).

Further, when the polyitaconic acid is copolymer, it is preferable that the content of itaconic acid segments in the copolymer is 10% by mass or more, and it is more preferable that the content of itaconic acid segments in the copolymer is 50% by mass or more.

(pH)

It is preferable that the pH of the above-mentioned metal surface treatment composition is not less than 2 and not more than 5. It is more preferable that the pH of the above-mentioned metal surface treatment composition is not less than 3 and not more than 4.5. When the pH of the above-mentioned metal surface treatment composition is less than 2, etching becomes excessive, while when the pH of the above-mentioned metal surface treatment composition is more than 5, etching becomes insufficient. The adjustment of the pH of the metal surface treatment composition is performed such that nitric acid is added when the pH is high, while ammonium, sodium hydrate or potassium hydrate is added when the pH is low.

(Additives)

Predetermined amounts of various additives may be added to the above-mentioned metal surface treatment composition within ranges that the advantageous effects of the present invention are not impaired. For example, metal ions such as manganese ions, zinc ions, calcium ions, iron ions, magnesium ions, molybdenum ions, vanadium ions, titanium ions or silicon ions; a surface-active agent such as an anionic surface-active agent or a nonionic surface-active agent; or a chelating agent such as a citric acid, a gluconic acid, a malonic acid, a succinic acid, a tartaric acid or a phosphoric acid may be added.

(Film forming condition)

The aluminum surface treated sheet is obtained by bringing the previously-mentioned metal surface treatment composition into contact with at least one surface of the aluminum substrate.

With respect to a liquid temperature in forming the surface-treatment film on the aluminum substrate using the above-mentioned metal surface treatment composition, it is preferable to set the temperature to a value which falls within a temperature range having a lower limit of 30°C and an upper limit of 70°C. It is more preferable to set the temperature of the surface treatment liquid to a value which falls within a temperature range from 40°C to 60°C. When the liquid temperature is lower than 30°C, a reaction speed is lowered so that a film forming reaction becomes slow whereby it is necessary to prolong a treatment time for obtaining a sufficient film quantity leading to lowering of productivity. On the other hand, when the liquid temperature exceeds 70°C, stability of the aluminum ion trapping agent is lowered.

Further, it is preferable to set the treatment time to not less than 1 second and not more than 60 seconds. When the treatment time is less than 1 second, the film forming reaction time is insufficient so that a proper surface-treatment film is hardly formed, while when the treatment time exceeds 60 seconds, the treatment time is prolonged so that the manufacture of the resin-coated metal sheet becomes disadvantageous industrially.

Here, in treating the aluminum substrate with the metal surface treatment composition by a spray method, it is preferable to perform the treatment within a range from 1 second to 20 seconds. When the treatment time is less than 1 second, a formed film quantity is insufficient thus giving rise to a possibility that the corrosion resistance and the adhesiveness of the resin-coated metal sheet are lowered, while when the treatment time exceeds 20 seconds, etching at the time of forming the filmprogresses excessively thus giving rise to a possibility that the corrosion resistance and the adhesiveness of the resin-coated metal sheet are lowered.

(Cleaning with water)

The aluminum substrate on which the surface-treatment film is formed due to the above-mentioned contact between the aluminum substrate and the metal surface treatment composition is cleaned with water for removing the metal surface treatment composition remaining on the surface of the aluminum substrate. Water such as service water or industry-use water can be used as water for cleaning the surface of the aluminum substrate. It is preferable to set a temperature of water for such cleaning to a value which falls within a temperature range having a lower limit of 5 °C and an upper limit of 80 °C. It is more preferable to set such water temperature to not less than 20°C and not more than 70°C. It is preferable to set water cleaning time to not less than 2 seconds and not more than 60 seconds. After cleaning the surface of the aluminum substrate with water, it is preferable to clean the surface of the aluminum substrate using pure water such as ion-exchange water or distilled water for preventing components contained in cleaning water such as calcium, iron, chlorine and the like from remaining on the surface of the aluminum substrate. It is preferable to set a temperature of pure water for such cleaning to a value which falls within a temperature range having a lower limit of 5°C and an upper limit of 80°C. It is more preferable to set the temperature of pure water to not less than 20°C and not more than 70°C. It is more preferable to set the water cleaning time to not less than 1 second and not more than 20 seconds.

(Drying method)

It is preferable to dry the surface-treatment filmafter water cleaning. As a method for drying the above-mentioned film, drying by heating may preferably be used. For example, drying by heating may be performed by an oven and/or the forced circulation of hot air. The drying by heating is performed at a temperature of 40 to 100°C for 1 to 60 seconds.

(Adhesion quantities of zirconium)

With respect to the film quantity of the surface-treatment film formed on the aluminum substrate using the above-mentioned metal surface treatment composition, it is preferable that the surface-treatment film contains not less than $2mg/m^2$ and not more than $100mg/m^2$ of zirconium in terms of metal atoms. It is more preferable that the surface-treatment film contains not less than $10mg/m^2$ and not more than $25mg/m^2$. When the film quantity of the surface-treatment film is less than $2mg/m^2$, there exists a possibility that the adhesiveness is lowered, while when the film quantity of the surface-treatment film exceeds $100mg/m^2$, the cohesive failure by forming is liable to occur thus giving rise to a possibility that the adhesiveness and the corrosion resistance are lowered.

The adhesion quantity of the zirconium compound in the above-mentioned surface-treatment film can be determined using a commercially-available X-ray fluorescence analyzer. That is, a plurality of samples whose adhesion quantities of zirconium are known and differ from each other in adhesion quantity are measured, and a calibration curve of strength-adhesion quantity is obtained based on measured strengths. Under the similar conditions, a sample is cut out from an aluminum surface treatment sheet, and the strength of the sample is measured. By converting the measured strength into the adhesion quantity based on the calibration curve, the adhesion quantity of the zirconium compound can be measured.

It is preferable that the content of the polyitaconic acid contained in the surface-treatment film is not less than $0.5mg/m^2$ and not more than $20mg/m^2$ in terms of organic carbon content derived from the polyitaconic acid. It is more preferable that the content of the polyitaconic acid contained in the surface-treatment film is not less than $1mg/m^2$ and not more than $10mg/m^2$ in terms of organic carbon content derived from the polyitaconic acid. When the content of the polyitaconic acid is less than $0.5mg/m^2$, there exists a possibility that the adhesiveness is lowered, while when the content of the polyitaconic acid exceeds 20mg/m$^2$, the cohesive failure by forming is liable to occur thus giving rise to a possibility that the adhesiveness and the corrosion resistance are lowered. The adhesion quantity of the polyitaconic acid in the surface-treatment film can be measured as organic carbon content derived from the polyitaconic acid using a total organic carbon measuring device. The sample is a disc having a diameter of 40mm and the measuring condition is at 450°C for 5 minutes.

With respect to a thickness of the surface-treatment film layer, it is preferable to set the film thickness to a value which falls within a range from 1 to 100nm, and more preferably to a value which falls within a range from 3 to 50nm. When the film thickness is less than 1nm, the surface-treatment film layer cannot acquire excellent adhesiveness with the organic resin film which is formed on the surface-treatment film layer, while when the film thickness exceeds 100nm, the cohesive failure occurs in the film and hence, there is a possibility that the adhesiveness is lowered. The film thickness of the surface-treatment film can be determined using a commercially available XPS (X-ray photoelectron spectroscopy analysis) equipment using an ordinary method.

(Formation of adhesive layer)

Next, an adhesive layer is formed using a post-treatment agent after forming the surface treatment layer by the metal surface treatment composition. The post-treatment agent is an aqueous solution which contains a cationic-group containing resin and a water-based resin. The adhesive layer formed using this post-treatment agent exhibits the high adhesiveness with the surface treatment film obtained by the treatment using the metal surface treatment composition as well as with the organic resin film layer. The adhesive layer also exhibits the excellent adhesiveness with a thermoplastic resin film such as a polyester film having small functional groups.

(Cationic-group containing resin)

The cationic-group containing resin contained in the post-treatment agent contains 5.0meq/g or more of cationic group in a resin solid content, and preferably contains 7meq/g or more of cationic group in a resin solid content. When a content of cationic group is less than 5meq/g, an adhesive effect is weak and hence, there exists a possibility that the adhesiveness is lowered. A preferable content of cationic-group containing resin is not less than 50ppm and not more than 8000ppm. When the content of cationic-group containing resin is less than 50ppm, the content of cationic-group containing resin is insufficient so that the adhesiveness is lowered. On the other hand, when the content of cationic-group containing resin is more than 8000ppm, the film thickness is increased so that the adhesiveness is lowered. As a specific example of cationic-group containing resin, polyallelamine, polylysine, polyvinylamine, polyethyleneimine or the like can be named. Among these cationic-group containing resin, polyallelamine and/or polylysine which have a primary amino group are preferably used.

The measurement of an equivalent amount of cationic group A (meq/g) of cationic-group containing resin is performed such that a fixed amount C(g) of a sample of cationic-group containing resin whose non-volatile amount B (g) per 1g is measured in advance is sampled, and 0.1N hydrochloric acid is dropped on such a specimen until an inflexion point of the potential using a potential-difference volumetric determination device. An equivalent amount of functional group is calculated based on a 0.1N hydrochloric acid dropped quantity D(ml), a non-volatile amount B and specimen sampled amount C using a following formula.

$$A(meq/g) = (D/10000) \times (1/B) \times (1/C) \times 1000$$

(Water-based resin)

The water-based resin contained in the post-treatment agent is a resin which contains at least one selected from a group consisting of an acrylic resin, a urethane resin, a polyester resin, a phenol resin and an epoxy resin.

Among these resins, the acrylic resin may preferably be an oxazoline-group containing acrylic resin which contains at least two oxazoline groups in one molecule of the resin. The oxazoline groups which are contained in the oxazoline-group containing acrylic resin reacts with an acidic group such as a carboxyl group or a phenol hydroxyl group, for example, thus forming a crosslinking structure. As the oxazoline-group containing acrylic resin, a commercially available oxazoline-group containing acrylic resin can be used. For example, "EPOCROS WS500" (product name, made by NIPPON SHOKUBAI CO., LTD.), "EPOCROS WS700" (product name, made by NIPPON SHOKUBAI CO., LTD.) and "NK Linker FX" (product name, made by Shin-nakamura Chemical Corporation) can be used. An oxazoline valence of oxazoline-group containing acrylic resin may preferably be 100 to 240. This is because when the oxazoline valence does not fall within this range, there exists a possibility that the oxazoline-group containing a resin cannot acquire aiming advantageous effects.

A preferable content of water-based resin is not less than 30ppm and not more than 4000ppm. This is because when the preferable content of water-based resin is less than 30ppm, a content of cationic-group containing resin is insufficient thus lowering adhesiveness, while when the preferable content of water-based resin is more than 4000ppm, a film thickness is increased thus lowering adhesiveness.

(Dry film quantity)

A dry film quantity in terms of total organic carbon content of the adhesive layer formed by the post-treatment agent including the above-mentioned cationic-group containing resin and water-based resin may preferably be not less than 2mg/m$^2$ and not more than 200mg/m$^2$. This is because when the dry film quantity in terms of total organic carbon content is less than 2mg/m$^2$, a resin quantity (functional group quantity) is small thus lowering the adhesiveness, while when the dry film quantity in terms of total organic carbon content is more than 200mg/m$^2$, the film thickness is increased thus lowering the adhesiveness. Here, "dry film quantity in terms of total organic carbon content" implies a total organic carbon content contained in the dry film".

(Measurement of quantity of adhesive layer)

A dry weight of the adhesive layer formed by the above-mentioned cationic-group containing resin and the water-based resin aqueous solution can be determined by measuring the organic carbon mass derived from the cationic-group containing resin and the water-based resin. The total organic carbon content can be measured using a commercially-available total organic carbon automatic analyzer or the like. The sample is a disc having a diameter of 40mm and the measuring condition is at 450°C for 5 minutes.

With respect to a thickness of the adhesive layer of the present invention, it is preferable to set the thickness to a value which falls within a range from 4 to 500nm, and it is more preferable to set such a thickness to a value which falls within a range from 10 to 200nm. It is because when the thickness is less than 4nm, the adhesive layer cannot acquire excellent adhesiveness with the organic resin film which is formed on the adhesive layer, while when the thickness exceeds 500nm, the cohesive failure occurs in the film and hence, there exists a possibility that the adhesiveness is lowered.

The film thickness of the adhesive layer can be determined using a commercially available XPS (X-ray photoelectron spectroscopy analysis) equipment using an ordinary method.

(Coating method of adhesive layer)

The coating method of an adhesive layer according to the present invention is not particularly limited provided that the coating method is a method which brings the above-mentioned cationic-group containing resin and the water-based resin aqueous solution into contact with an object to be treated. As the coating method of the adhesive layer, an ordinary method such as a roll coating method, a spray method or an immersion method can be named. Among these methods, it is preferable to use the roll coating method.

With respect to the liquid temperature of the above-mentioned cationic-group containing resin and the water-based resin aqueous solution, the film formability is not influenced by temperature and hence, it is unnecessary to adjust the liquid temperature in a coating step. However, for facilitating drying after the treatment, it is preferable to set a lower limit of the liquid temperature to 20°C. Further, when the cationic-group containing resin and the water-based resin aqueous solution use a neutralizer for water dispersion, the neutralizer may be evaporated so that it is preferable to set an upper limit of the liquid temperature to 50°C.

After bringing the above-mentioned cationic-group containing resin and the water-based resin aqueous solution into contact with the object to be treated, it is preferable to dry the cationic-group containing resin and the water-based resin aqueous solution by drying by heating. As such drying by heating, for example, drying by an oven can be named.

In the above-mentioned drying, with respect to the drying temperature, it is preferable to set a lower limit to 40°C and an upper limit to 200°C as a raw material temperature. It is more preferable to set the lower limit to 60°C and the upper limit to 120°C. Further, a drying time may be suitably determined based on a drying method, wherein it is preferable to set a lower limit to 1 second and an upper limit to 60 seconds.

The adhesive layer of the present invention has a considerably small thickness compared to a thickness of an adhesion primer or a coating material and hence, a burden on the coating method or the drying method is small whereby the adhesive layer can be formed by coating in a simple manner in later steps of the surface treatment.

(Organic resin film layer)

(Formation of Organic resin film layer)

After the formation of the above-mentioned adhesive layer, an organic resin film layer is further formed on a surface of the adhesive layer. The organic resin film layer may be formed of a thermoplastic resin or a coating film corresponding to an object of the formed body or the application of the formed body.

When the formed body is a can lid, coating of a coating film, thermoplastic resin coating by way of an adhesion primer, or direct thermoplastic resin coating is preferably applied to the surface-treatment layer.

Further, in forming the formed body such as a can body by press forming, when the degree of forming is small as in the case of a drawn can or a DR can, coating of a coating film, thermoplastic resin coating by way of an adhesion primer, or direct thermoplastic resin coating is preferably applied to the surface-treatment layer, while when the degree of forming is large as in the case of deep drawing, drawing and ironing or stretch drawing, thermoplastic resin coating by way of an adhesion primer or direct thermoplastic resin coating is preferably applied to the surface-treatment layer.

(Coating film, formation of adhesion primer)

As the coating film, a thermosetting resin coating material such as a phenol-formaldehyde resin, a furan-formaldehyde resin, a xylene-formaldehyde resin, a ketone-formaldehyde resin, a urea formaldehyde resin, a melamine-formaldehyde resin, an alkyd resin, an unsaturated polyester resin, an epoxy resin, a bismaleimide resin, a triaryl cyanurate resin, a thermosetting acrylic resin, a silicone resin, or an oiliness resin, for example, or a thermoplastic resin coating material such as a vinyl chloride-vinyl acetate copolymer, a partially saponificated product of the vinyl chloride-vinyl acetate copolymer, a vinyl chloride-maleic acid copolymer, a vinyl chloride-maleic acid-vinyl acetate copolymer, an acrylic polymer or saturated polyester resin can be named. These resin coating materials may be used in a single form or in combination of two or more kinds of the coating materials. Among these resin coating materials, an epoxy acrylic coating material, an epoxy phenolic coating material, a polyester-based coating material, an epoxy urea-based coating material, a vinyl organosol-based coating material or the like can be particularly preferably used.

A favorable dry-coating film mass of the coating film made of an epoxy acrylic coating material, an epoxy phenolic coating material, a polyester-based coating material, anepoxy urea-based coating material and a vinyl organosol-based coating material is described hereinafter.

The dry-coating film mass of the coating film made of the epoxy acrylic coating material is preferably 10 to 160mg/dm$^2$. The dry-coating film mass of the coating film made of the epoxy phenolic coating material and the polyester-based coating material is preferably 30 to 140mg/dm$^2$. The dry-coating film mass of the coating film made of the epoxy urea-based coating material is preferably 30 to 70mg/dm$^2$. The dry-coating film mass of the coating film made of the vinyl organosol-based coating material is preferably 30 to 160mg/dm$^2$.

As the above-mentioned adhesion primer layer, an epoxy phenolic resin, an epoxy acrylic resin, a polyester phenolic resin, a polyester amino resin, a polyester urethane resin or the like can be named. The adhesion primer coating film exhibits excellent adhesiveness for both of an adhesive layer and a film, and also exhibits an excellent corrosion resistance.

As the epoxy phenolic resin-based adhesion primer, a coating material containing a phenol resin and an epoxy resin at a mass ratio of 50:50 to 1:99, particularly at a mass ratio of 40:60 to 5:95 is preferable since the coating material exhibits both excellent adhesiveness and excellent corrosion resistance. The adhesion primer layer may preferably have a thickness of 0.01 to 10$\mu$m in general. The adhesion primer layer may be preliminarily formed on the adhesive layer coated aluminum surface treated sheet or on the above-mentioned polyester film.

The above-mentioned coating film or adhesion primer layer is applied to an adhesive layer using a method such as roller coating, blade coating or spray coating. The applied coating film or the applied adhesion primer is baked by a hot-air oven, an infrared heating furnace or the like so that the coating film can be used as a material for forming the formed body such as a can lid.

(Thermoplastic resin film layer)

As the organic resin film which is directly applied to the adhesive layer or is applied to the adhesive layer by way of the adhesive primer layer, a thermoplastic resin can be named.

The organic resin film made of thermoplastic resin is not particularly limited, and for example, the organic resin film may be a plastic filmmade of a thermoplastic resin, wherein as the thermoplastic resin, such as polyolefin such as crystallinity polypropylene, crystallinity propylene-ethylene copolymer, crystallinity polybutene-1, crystallinity poly4-methyl pentene-1, low density polyethylene, medium density polyethylene or high density polyethylene, ethylene-vinyl acetate copolymer (EVA), ethylene-ethyl acrylate copolymer (EEA), or ion cross-link olefin copolymer (ionomer) ; aromatic vinyl copolymer such as polystyrene, or styrene-butadiene copolymer; vinyl halide polymer such as polyvinylchloride, or vinylide chloride resin; nitrile polymer such asacrylonitrile-styrenecopolymer, or acrylonitrile-styrene-butadiene copolymer; polyamide such as nyron6, nyron66, or para or metha xylylene adipamido; polyester such as polyethylene terephthalate (PET), or poly tetramethylene terephthalate; various polycarbonates; or polyacetal such as polyoxymethylene can be named.

Among various thermoplastic resins, a polyester-based resin or a polyolefin-based resin can be preferably used.

As the polyester-based resin, thermoplastic polyesters such as polyethylene terephthalate, polybutylene terephthalate, or polynaphthalene terephthalate can be used.

As the preferable polyester, polyethylene terephthalate (PET) can be named. However, provided that essential properties of polyethylene terephthalate are not deteriorated, it is possible to use co-polyester which contains other polyester units while containing an ethylene terephthalate unit as a main component.

As a copolymer component for forming such co-polyester, it is possible to name a dicarboxylic acid component such as isophthalic acid, p-β-oxyethoxy benzoic acid, naphthalene2, 6-dicarboxylic acid, diphenoxy ethane-4, 4'-dicarboxylic acid, 5-sodium sulfo isophthalic acid, adipic acid, sebacic acid or an alkyl ester derivative of these components, or a glycol component such as propylene glycol, 1,4-butanediol, neopentylglycol, 1,6-hexylene glycol, cyclohexane dimethanol, ethylene oxide adduct of bisphenol A, diethylene glycol, or triethylene glycol.

As the thermoplastic resin, a co-polymer thermoplastic polyester-based resin containing two or more kinds of the above-mentioned constitutional units or a blended product of two or more kinds of thermoplastic polyester resins may be used.

It is preferable to use the thermoplastic polyester resin having a melting point of 130°C to 255°C. This is because retort resistance is deteriorated when the melting point is less than 130°C, while coating of the thermoplastic polyester resin to the adhesive layer coated aluminum surface-treated sheet becomes difficult when the melting point exceeds 255°C.

The above-mentioned thermoplastic resin may be coated to the adhesive layer coated aluminum surface-treated sheet by heat adhesion after forming the film or the thermoplastic resin may be coated to the adhesive layer coated aluminum surface-treated sheet by an extrusion and lamination method in which the thermoplastic resin in a molten state by heating is extruded into a film shape through a slit having a narrow extruding width of an extruder, and the thermoplastic resin is coated to the adhesive layer coated aluminum surface-treated sheet directly.

Coating of the film on the adhesive-layer-coated aluminum surface-treated sheet by way of the adhesion primer may be performed by heat adhesion of the film or the extrusion and lamination of the film after coating the adhesive-layer-coated surface-treated sheet with the adhesion primer or by coating the surface-treated sheet with the film by heat adhesion after coating one surface of the film with an adhesive film.

In coating the surface-treated sheet with the film after forming the film, the above-mentioned film is not specifically limited, and the film may be a non-stretched film, a uniaxially stretched film or a bi-axially stretched film, for example.

(Formed body)

In the resin-coated aluminum alloy sheet of the present invention, the organic resin film layer is firmly adhered to the aluminum alloy sheet thus exhibiting favorable corrosion resistance and a favorable surface state whereby the resin-coated aluminum alloy sheet can be also used in a planar sheet state directly. On the other hand, the resin-coated aluminum alloy sheet of the present invention exhibits extremely favorable formability and hence, various forming such as drawing, bending, flanging forming, stamping and the like can be suitably applied to the resin-coated aluminum alloy sheet. Accordingly, it is possible to obtain various kinds of formed bodies having complicated shapes such as vessels, can materials, lids for vessels, electronic appliances, office work products, toys, furniture, roof materials, wall materials, interior and exterior materials for vehicles, ships and the like using the resin-coated aluminum alloy sheet. In this manner, the resin-coated aluminum alloy sheet can be effectively used in various applications. A can lid which constitutes one example of the formed boy can be formed by a known forming method such as a press forming method using the above-mentioned resin-coated aluminum alloy sheet for a can lid. With respect to lid types of the can lid, in general, the can lid is applicable to a stay-on-tab-type easy-to-open lid (SOT), a full-open-type easy-to-open lid (EOE) or a three-piece-can bottom lid such as a welded can.

Particularly, the resin-coated aluminum alloy sheet is, without using a primer, applicable to an SOT or an EOE coated with a polyester film which is requested to exhibit high adhesiveness with a metal substrate. Further, when necessary, it is possible to enhance the adhesiveness and the corrosion resistance further by interposing an adhesionprimer layer between the adhesive layer and the organic resin film layer.

For example, in case of forming the SOT or EOE, firstly, the resin-coated aluminum alloy sheet is blanked into a predetermined shape and a predetermined size. Subsequently or simultaneously with such blanking, the blanked resin-coated aluminum alloy sheet is formed into a can lid using a press mold. Next, score forming and a rivet forming for forming a partial opening are applied to an outer surface side of the can lid, and a tab for opening is mounted on the outer surface side of the can lid, a peripheral portion of an opening is formed into a curl for double seaming, sealing compound is applied to an inner surface side of the curl, and is dried thus forming the can lid. Further, a bottom lid for a three-piece can such as a welded can be formed by a method which excludes a score forming step, a rivet forming step and a tab mounting step from the above-mentioned steps.

A can body which constitutes another example of the formed body can be formed by a known forming method using the above-mentioned resin-coated aluminum alloy sheet for a can body.

Firstly, the resin-coated aluminum alloy sheet is blanked into a predetermined shape and a predetermined size and, subsequently, the blanked resin-coated aluminum alloy sheet is formed into a can body using a press mold.

As a forming method, a conventionally known forming method such as drawing, drawing/redrawing, drawing and ironing, bending after drawing (thinning/drawing or stretching) is applied to the resin-coated aluminum alloy sheet so as to form seamless cans having various shapes.

In case of a thermoplastic resin-coated sheet, after redrawing, stretching-by-bending and/or ironing may be performed so as to reduce a wall thickness of a side wall portion of the can body. The reduction of wall thickness is performed such that compared to a wall thickness of a bottom portion of the can body, a wall thickness of the side wall portion becomes 20 to 95%, and more particularly 30 to 90% of an original sheet thickness of the laminated sheet by stretch-by-drawing and/or ironing.

The obtained can body is subject to heat treatment of at least one stage thus providing aligned crystallization to a thermoplastic resin layer of a can barrel portion, removing residual distortion generated by the previously-mentioned forming, evaporating a lubricant used in forming from a surface of the thermoplastic resin-coated sheet, or curing printed ink on the surface of the thermoplastic resin-coated sheet by drying. After such heat treatment, the can body is subject to quenching or gradual cooling. Further, when necessary, the thermoplastic resin-coated sheet is subject to neck-in forming or roll necking forming of one stage or multiple stages, and the can body is subject to flange forming thus forming a seamed can. Further, after forming a seamless can, an upper portion of the seamless can may be deformed so as to form a bottle-shaped can body.

Example

Hereinafter, the present invention is explained more specifically in conjunction with examples. However, the present invention is not limited to these examples.

(Example 1)

(Preparation of surface treatment liquid)

A fluoro zirconic acid, an aluminum hydroxide, a hydrofluoric acid and a polyitaconic acid ("PIA-728" (product name) made by IWATA CHEMICAL CO.,LTD., molecular weight: approximately 3000) are blended together in a state that zirconium ions amount 500ppm, aluminum ions amount 100ppm, effective fluorine ions amount 10ppm, and polyitaconic acid amount 200ppm respectively, and ammonium is added to the mixture so as to set the pH of the surface treatment liquid to 3.5 thus obtaining the metal surface treatment composition.

(Surface treatment)

Degreasing treatment is performed by immersing a commercially available aluminum-manganese alloy sheet (kind: JIS A3004, sheet thickness: 0.30mm, sheet size: 200x300mm) into 2% aqueous solution (65°C) of degreasing agent "SCL420N-2" (product name) made by Nippon Paint Co., Ltd. for 7 seconds. After the degreasing treatment is performed, the aluminum-manganese alloy sheet is cleaned with water and, thereafter, the acid cleaning is performed by immersing the aluminum-manganese alloy sheet into 2% aqueous solution (50°C) of sulfuric acid for 3 seconds. After the acid cleaning is performed, the aluminum-manganese alloy sheet is cleaned with water and, thereafter, spray treatment is performed to the aluminum-manganese alloy sheet at 60°C for 6 seconds using the metal surface treatment composition. Next, the aluminum-manganese alloy sheet is cleaned with water, is dehydrated using a squeezing roll and, thereafter, is dried under a condition of 80°C for 60 seconds. A zirconium quantity in the surface-treatment film is 15mg/m$^2$, and a carbon content in the surface-treatment film is 2mg/m$^2$.

(Measurement of contents of components in surface-treatment film)

The adhesion quantity of zirconium in the formed surface-treatment film is measured using the X-ray fluorescence analyzer ("XRF1700" (product name) made by Shimadzu Corporation). Further, the adhesion quantity of polyitaconic acid is measured as the amount of organic carbon derived from the polyitaconic acid using a total organic carbon measuring device (Multiphase Carbon and Hydrogen/Moisture Determinator "RC412" made by LECO Corporation). A disc-shaped plate having a diameter of 40mm is used as a sample, and the measurement is performed under the condition of 450°C for 5 minutes. A result of the measurement is shown in Tables 1 and 2.

(Formation of adhesive layer)

A post-treatment agent which contains 7000ppm of polyallylamine ("PAA-10C" (product name) made by Nitto Boseki Co., Ltd., cationic-group content: 17.5meq/g) as the cationic-group containing resin, and 3000ppm of phenol resin ("BRL 141B" (product name) made by SHOWA HIGHPOLYMER CO., LTD.) as the water-based resin is applied to both surfaces of the aluminum substrate which forms the above-mentioned surface treatment film by coating using a reverse roll coater (wet coating quantity: approximately 4g/m$^2$). Thereafter, the aluminum substrate coated with the post treatment agent is dried in an oven having a furnace temperature of 150°C for 20 seconds thus acquiring the adhesive layer. When a film quantity in terms of organic carbon content of the adhesive layer is measured using a total organic carbon measuring device ("RC-412" (product name) made by LECC Corporation), the film quantity is 20mg/m$^2$ on both surfaces of the aluminum substrate.

(Formation of resin-coated aluminum alloy sheet)

A copolymerized polyethylene terephthalate film containing 15mol% of isophthalic acid and having a thickness of 16$\mu$m which constitutes a film for forming an inner side of a can and a copolymerized polyethylene terephthalate film containing 15mol% of isophthalic acid and having a thickness of 16$\mu$m which constitutes a film for forming an outer side of the can are respectively extruded from a T die of a molten resin extruder to a cooling roll and cooled thus producing the film for inside of a can and the film for outside of a can. The aluminum alloy sheet on which the adhesive layer is formed is heated up to 230°C, and is clamped by a pair of lamination rolls whose temperature is set at 150°C. The above-mentioned films are thermally laminated to the surface-treated aluminum alloy sheet at a sheet feeding speed of 150m/min and, thereafter, the surface-treated aluminum alloy sheet is immediately cooled with water. In such a manner, a can body material formed by the aluminum alloy sheet having the inner surface and the outer surface thereof coated with polyester resin is obtained.

(Preparation of can body)

The resin-coated aluminum alloy sheet as the can body material is formed into a disc shape having a diameter of 179mm by blanking, and is formed into a shallow-drawn cup by drawing. Then, the shallow-drawn cup is formed into a cup by ironing after redrawing. Various characteristics of this cup are as follows.
Can-body diameter: 66mm
Can-body height: 172mm
Average sheet thickness reduction rate of side wall portion of can relative to original sheet thickness: 67%
The can body is formed by doming using an ordinarymethod, is subject to heat treatment at a temperature of 220°C and, thereafter, is gradually cooled. After cooling, trimming is performed on an opening end peripheral portion so as to set a cup height at a fixed value. Thereafter, printing on an outer surface of a can barrel and baking and drying of printing, neck-forming and flange-forming are performed thus producing a seamless can body having a capacity of 500ml. No problem arises in forming the seamless can body. Then, the can body is evaluated as follows.

(Resistance against delamination with flaws)

A flaw which reaches a metal surface is formed on an inner surface of a smallest diameter portion of a neck portion of a manufactured can body in the circumferential direction by a cutter and, thereafter, the can body is filled with distilled water, and a can lid is seamed to the can body. Thereafter, a retort treatment is applied to the can at a temperature of 130°C for 30 minutes. After returning the temperature of the distilled-water filled can to a room temperature, the presence or the non-presence of peeling-off of an inner surface film at a flaw-formed portion is evaluated withnakedeyes. The followings are set as evaluation criteria of resistance against delamination with flaws. Ranges where the can bodies can be used as products are indicated by "Good" and "Fair".
Good: Peel-off width from flaw is less than 2mm
Fair: Peel-off width from flaw is not less than 2mm and less than 5mm
Bad: Peel-off width from flaw is not less than 5mm

(Impact resistance adhesiveness)

The manufactured can body is filled with carbonated water, and a lid is seamed to the can body. The seamed can is stored at a temperature of 37°C for two weeks and, thereafter, is stored at a temperature of 5°C for two days. Then, the can body is left at rest in a horizontal posture with a temperature kept at 5°C. Then, the can body is deformed by an impact. That is, to deform the can body by the impact, a weight which weighs 1kg and has a spherical surface with a diameter of 65.5mm is dropped from the height of 40mm onto an upper surface portion of the can body such that the spherical surface of the weight hits the can. Thereafter, the can is opened. Then, the electric conduction of a portion of the can body deformed by the impact is measured, and the impact resistance of the can is evaluated. The electric conduction measurement is performed as follows. A sponge containing 1% of NaCl solution is brought into contact with a portion deformed by the impact, a voltage of 6.0V is applied between an electrode (cathode electrode) in the inside of the sponge and the can body, and a current which flows between the electrode and the can body is measured. The followings are set as evaluation criteria of impact resistance adhesiveness. Ranges where the can body can be used as products are indicated by "Good" and "Fair".

Good: average current value < 0.1mA
Fair: 0.1mA $\leq$ average current value < 0.15mA
Bad: 0.15mA $\leq$ average current value

(Pack test 1 (corrosion resistance of can body))

The manufactured can body is filled with 500g of Coca-Cola (trademark) as a content, and a lid is seamed to the can body in accordance with an ordinary method. The can body is stored at a temperature of 37°C for three months in a posture with the lid on the top. Thereafter, a seamed portion is cut off using a can opener, and the lid is separated from the can barrel. Then, a corroded state of an inner surface of the can barrel is observed using a microscope, and the corrosion resistance of the can body is evaluated. The pack test 1 is carried out with the number of samples being set to n=50. The evaluation result is described in Table 1. Ranges where the can body can be used as products are indicated by "no abnormality".

(Pack test 2 (corrosion resistance of can body))

The manufactured can body is filled with 500g of HiLiki lemon (trademark) as a content, and a lid is seamed to the can body in accordance with an ordinary method. The can body is stored at a temperature of 37°C for three months in a posture with the lid on the top and, thereafter, is stored at a temperature of 5°C for two days. Then, the can body is left at rest in a horizontal posture with a temperature kept at 5°C. Then, the can body is deformed by an impact. That is, to deform the can body by the impact, a weight which weighs 1kg and has a spherical surface with a diameter of 65.5mm is dropped from the height of 40mm onto an upper surface portion of the can body such that the spherical surface of the weight hits the can. Further, the can body is stored at a temperature of 37°C for three months in an upright posture. Thereafter, a seamed portion is cut off using a can opener, and the lid is separated from the can barrel. Then, a corroded state of a deformed portion of an inner surface of the can barrel formed by an impact is observed using a microscope, and the corrosion resistance of the can body is evaluated. The pack test 2 is carried out with the number of samples being set to n=50. The evaluation result is described in Table 1. Ranges where the can body can be used as products are indicated by "no abnormality".

The example 1 exhibits favorable evaluation results with respect to all of resistance against delamination with flaws, impact resistance adhesiveness, pack test 1 and pack test 2.

(Examples 2, 3)

Can bodies are prepared in the same manner as the example 1 except for that a cationic group content of polyallylamine which is used as the cationic-group containing resin of the adhesive layer is changed to 5.0meq/g and 4.0meq/g respectively. Then, the evaluation of properties of the can bodies is performed. In changing the cationic group content, the cationic group content is lowered by blocking a cationic group of polyallylamine used in the example 1 with a hydrochloric acid, and the evaluation of properties is performed.

The example 2 exhibits favorable evaluation results with respect to all of resistance against delamination with flaws, impact resistance adhesiveness, pack test 1 and pack test 2.

The example 3 exhibits favorable evaluation results with respect to the impact resistance adhesiveness, the pack test 1 and the pack test 2. Although the resistance against delamination with flaws is not sufficient, the resistance against delamination with flaws is within an allowable range.

(Example 4)

Can bodies are prepared in the same manner as the example 1 except for that polyallylamine which is used as the cationic group containing resin of the adhesive layer is changed to polylysine ("polylysine" (product name) made by CHISSO COROPRATION, cationic group content 7.8meq/g). Then, the evaluation of properties of the can bodies is performed. The example 4 exhibits favorable evaluation results with respect to all of the resistance against delamination with flaws, the impact resistance adhesiveness, the pack test 1 and the pack test 2.

(Example 5)

Can bodies are prepared in the same manner as the example 1 except for that phenol resin which is used as the water-based resin of the adhesive layer is changed to acrylic resin ("JONCRYL70" (product name) made by Johnson Polymer Co., Ltd.). Then, the evaluation of properties of the can bodies is performed. The example 5 exhibits favorable evaluation results with respect to all of the resistance against delamination with flaws, the impact resistance adhesiveness, the pack test 1 and the pack test 2.

(Example 6)

Can bodies are prepared in the same manner as the example 1 except for that phenol resin which is used as the water-based resin of the adhesive layer is changed to urethane resin ("SF820" (product name) made by Dai-ichi Kogyo Seiyaku Co. , Ltd.). Then, the evaluation of properties of the can bodies is performed. The example 6 exhibits favorable evaluation results with respect to all of the resistance against delamination with flaws, the impact resistance adhesiveness, the pack test 1 and the pack test 2.

(Example 7)

Can bodies are prepared in the same manner as the example 1 except for that phenol resin which is used as the water-based resin of the adhesive layer is changed to polyester resin ("VYLONAL MD-1480" (product name) made by TOYOBO CO., LTD.). Then, the evaluation of properties of the can bodies is performed. The example 7 exhibits favorable evaluation results with respect to all of the resistance against delamination with flaws, the impact resistance adhesiveness, the pack test 1 and the pack test 2.

(Example 8)

Can bodies are prepared in the same manner as the example 1 except for that phenol resin which is used as the water-based resin of the adhesive layer is changed to epoxy resin ("Hitaloyd 7800-J21" (product name) made by Hitachi Chemical Co. , Ltd.). Then, the evaluation of properties of the can bodies is performed. The example 8 exhibits favorable evaluation results with respect to all of the resistance against delamination with flaws, the impact resistance adhesiveness, the pack test 1 and the pack test 2.

(Example 9)

Can bodies are prepared in the same manner as the example 1 except for that organic/inorganic chemical conversion treatment film of the surface treated layer is changed to phosphoric acid zirconium chemical conversion treatment film ("Alusurf 440" (product name) made by NIPPON PAINT Co., Ltd.) which is an inorganic chemical conversion treatment film. Then, the evaluation of properties of the can bodies is performed. With respect to film quantity, zirconium content is 15mg/m$^2$, and carbon content is 0mg/m$^2$. The example 9 exhibits favorable evaluation results with respect to the impact resistance adhesiveness, the pack test 1 and the pack test 2. Although the resistance against delamination with flaws is not sufficient, the resistance against delamination with flaws is within an allowable range where the can bodies can be used as products.

(Examples 10, 11, 12, 13, 14, 15, 16, 17)

Can bodies are prepared in the same manner as the example 1 except for that zirconium quantity and carbon content based on polyitaconic acid of the surface treated layer is changed as indicated in Table 1. Then, the evaluation of properties of the can bodies is performed.
Surface treatment is performed in the same manner as the example 1 except for that surface treatment solution is respectively changed in the following manner. That is, the surface treatment solution contains zirconium ion (7ppm), aluminum ion (1ppm) and effective fluorine ion (0.1ppm) in the example 10, the surface treatment solution contains zirconium ion (20ppm), aluminum ion (4ppm) and effective fluorine ion (0. 4ppm) in the example 11, the surface treatment solution contains zirconium ion (10000ppm), aluminum ion (2000ppm) and effective fluorine ion (200ppm) in the example 12, and the surface treatment solution contains zirconium ion (13000ppm), aluminum ion (2700ppm) and effective fluorine ion (270ppm) in the example 13.

In the examples 14, 15, 16, and 17, surface treatment is performed in the same manner as the example 1 except for that polyitaconic acid quantity of the surface treatment solution is changed to (30ppm), (50ppm), (10000ppm) and (12000ppm), respectively.

In the evaluation result of the examples 10, 13, 14, and 17, although the resistance against delamination with flaws is not sufficient, the resistance against delamination with flaws is within an allowable range where the can bodies can be used as products. Except for that, examples 10, 11, 12, 13, 14, 15, 16 and 17 exhibit favorable evaluation results with respect to the resistance against delamination with flaws, the impact resistance adhesiveness, the pack test 1 and the pack test 2.

(Example 18)

Can bodies are prepared in the same manner as the example 1 except for that phenol resin which is used as the water-based resin of the adhesive layer is changed to oxazoline group containing acrylic resin ("EPOCROS WS700" (product name) made by NIPPON SHOKUBAI CO., LTD.). Then, the evaluation of properties of the can bodies is performed. The acrylic resin contains one weight per equivalent of oxazoline group per 220g of resin solid content (oxazoline value 220). The example 18 exhibits favorable evaluation results with respect to all of the resistance against delamination with flaws, the impact resistance adhesiveness, the pack test 1 and the pack test 2.

(Example 19)

Can bodies are prepared in the same manner as the example 1 except for that phenol resin which is used as the water-based resin of the adhesive layer is changed to 1500ppm of oxazoline group containing acrylic resin ("EPOCROS WS700" (product name) made by NIPPON SHOKUBAI CO., LTD.) and 1500ppm of phenol resin ("BRL 141B" (product name) made by SHOW A HIGH POLYMER CO., LTD.). Then, the evaluation of properties of the can bodies is performed. The example 19 exhibits favorable evaluation results with respect to all of the resistance against delamination with flaws, the impact resistance adhesiveness, the pack test 1 and the pack test 2.

(Example 20)

Can bodies are prepared in the same manner as the example 19 except for that polyallylamine which is used as the cationic-group containing resin of the adhesive layer is changed to polylysine ("polylysine" (product name) made by CHISSO COROPRATION, cationic group content 7.8meq/g) Then, the evaluation of properties of the can bodies is performed. The example 20 exhibits favorable evaluation results with respect to all of the resistance against delamination with flaws, the impact resistance adhesiveness, the pack test 1 and the pack test 2.

(Example 21, 22)

Can bodies are prepared in the same manner as the example 1 except for that carbon content of the adhesive layer is changed to 1mg/m$^2$ and 2mg/m$^2$ respectively from 20mg/m$^2$. Then, the evaluation of properties of the can bodies is performed. In changing carbon content, the post treatment agent described in the example 1 is diluted using ion exchanged water at dilution factors of 20 times and at dilution factors of 10 times respectively so as to change the concentration of an effective component in the post treatment agent to 1/20 and 1/10 respectively. In the evaluation result of the example 21, although the resistance against delamination with flaws is notsufficient,theresistanceagainst delamination with flaws is within an allowable range where the can bodies can be used as products. Except for that, examples 21 and 22 exhibit favorable evaluation results with respect to the resistance against delamination with flaws, the impact resistance adhesiveness, the pack test 1 and the pack test 2.

(Example 23, 24)

Can bodies are prepared in the same manner as the example 1 except for that carbon content of the adhesive layer is changed to 200mg/m$^2$ and 220mg/m$^2$ respectively from 20mg/m$^2$. Then, the evaluation of properties of the can bodies is performed. In changing carbon content, the post treatment agent described in the example 1 is changed to 70000ppm of polyallylamine and 30000ppm of phenol resin in the example 23. The post treatment agent described in the example 1 is changed to 77000ppm of polyallylamine and 33000ppm of phenol resin in the example 24.

In the evaluation result of the examples 23 and 24, although the resistance against delamination with flaws is not sufficient in the example 24, the resistance against delamination with flaws is within an allowable range where the can bodies can be used as products. Except for that, examples 23 and 24 exhibit favorable evaluation results with respect to the resistance against delamination with flaws, the impact resistance adhesiveness, the pack test 1 and the pack test 2.

(Comparison example 1)

Can bodies are prepared in the same manner as the example 1 except for that polyallylamine which is used as the cationic-group containing resin of the adhesive layer is not used. Then, the evaluation of properties of the can bodies is performed. The comparison example 1 exhibits favorable evaluation results with respect to the pack test 1. However, the comparison example 1 exhibits unfavorable evaluation results with respect to resistance against delamination with flaws, impact resistance adhesiveness and the pack test 2.

(Comparison example 2)

Can bodies are prepared in the same manner as the example 1 except for that phenol resin which is used as the water-based resin of the adhesive layer is not used. Then, the evaluation of properties of the can lids is performed. The comparison example 1 exhibits favorable evaluation results with respect to the pack test 1 . However, the comparison example 2 exhibits unfavorable evaluation results with respect to resistance against delamination with flaws and pack test 2. In the evaluation result of the comparison example 2, although the impact resistance adhesiveness is not sufficient, the impact resistance adhesiveness is within an allowable range.

(Comparison example 3)

Can bodies are prepared in the same manner as the example 1 except for that the surface treated layer is not used. Then, the evaluation of properties of the can bodies is performed. The comparison example 3 exhibits unfavorable evaluation results with respect to the resistance against delamination with flaws, the impact resistance adhesiveness, pack test 1 and pack test 2.

(Comparison example 4)

Can bodies are prepared in the same manner as the example 1 except for that the adhesive layer is not used. Then, the evaluation of properties of the can bodies is performed. The comparison example 4 exhibits favorable evaluation results with respect to the resistance against delamination with flaws, the impact resistance adhesiveness, pack test 1 and pack test 2 and unfavorable evaluation results with respect to the impact resistance.

(Example 25)

(Surface treatment)

An adhesive layer coated aluminum surface treated alloy sheet is prepared in the same manner as the example 1 except for that a commercially-available aluminum-manganese alloy sheet (JIS A5021, sheet thickness: 0.30mm, sheet size: $200 \times 300$mm) is used as an aluminum alloy sheet and an adhesive layer is formed on only the can-lid inner surface side. Here, the zirconium quantity of the surface treatment film is 15mg/m$^2$ and the carbon content of the surface treatment film is 2mg/m$^2$, while the carbon content of the adhesive layer is 20mg/m$^2$.

(Formation of resin-coated aluminum alloy sheet)

With respect to resin-coated aluminum alloy sheet, the inner surface resin-coated aluminum alloy sheet is formed by thermally laminating the surface-treated aluminum alloy sheet on which the above-mentioned adhesive layer is formed with copolymer film of biaxially-oriented polyethylene terephthalate/isophthalate 11mol% having a thickness of 30$\mu$m and, thereafter, an epoxy urea system coating material is applied to a can-lid outer-surface side of the obtained inner surface resin coated aluminum alloy sheet using a roll coater, and coating is baked by a hot blast stove at a temperature of 185°C for 10 minutes thus forming coating having a coating quantity of 45mg/dm$^2$ on an outer surface of the resin coated aluminum alloy sheet thus obtaining an aluminum alloy sheet for can lid whose inner and outer surface are coated without primer.

In thermal lamination, the surface-treated aluminum alloy sheet on which the adhesive layer is formed is heated up to 230°C, and is clamped by a pair of lamination rolls whose temperature is set at 150°C . The above-mentioned films are thermally laminated to only one side of the surface-treated aluminum alloy sheet at a sheet feeding speed of 150m/min and, thereafter, the surface-treated aluminum alloy sheet is immediately cooled with water. In such a manner, the aluminum alloy sheet having the inner surface thereof coated with polyether resin is obtained.

(Formation of can lid)

The resin-coated aluminum alloy sheet for can lid is formed into a disc having a diameter of 68.7mm by blanking in the direction where a surface to which a film is laminated is provided to an inner-surface side of the can lid. Then, by forming a full-open-type score (remaining score thickness: 110$\mu$m, score width: 20$\mu$m) on an outer surface side of the can lid, by riveting and attaching a tab for opening on the outer surface of the lid, by forming an opening end portion into a curl for double seaming, applying a sealing compound on an inner surface side of the curl, by drying the sealing compound, and by applying double seaming, an EOE having a lid diameter of 50.8mm is prepared.

(Evaluation)

(Evaluation of can lid)

The following evaluation is made with respect to the can lid.

(a) Feathering evaluation (adhesiveness)

With respect to a can lid formed of the thermoplastic resin coated metal sheet obtained by the above-mentioned manner, a retort sterilization treatment (130°C for 50 minutes) is performed. Thereafter, an opening is actually formed in the can lid, and the generation of feathering at an opening portion is evaluated. The feathering test is carried out with the number of samples being set to n=50. The result is evaluated as follows, and is collectively shown in Table 2. Ranges which allow the can lid to be used as products are indicated by "Good" and "Fair".
Good: an average length of feathering being less than 0.5mm Fair: an average length of feathering being not less than 0.5mm and less than 1.0mm
Bad: an average length of feathering being not less than 1.0mm

(b) Openability evaluation

With respect to a can lid formed of the resin coated metal obtained by the above-mentioned manner, a retort sterilization treatment (130°C for 50 minutes) is performed. Thereafter, Openability is evaluated. The evaluation result is described with a formula, that is, number of defective openings due to breaking of a tab/number of openings. The evaluation result is collectively shown in Table 2. Ranges which allow the can lids to be used as products are indicated by "the number of lids which cannot be opened: zero".

(c)Pack test (corrosion resistance of can lid)

A welded can barrel for general-food is filled with corn soup as a content, and a can lid obtained by the above-mentioned manner is seamed to the can body in accordance with an ordinary method. The sterilization treatment is applied to the seamed can at a temperature of 130°C for 60 minutes. The seamed can is stored at a temperature of 37°C for three months with the lid on a lower side and, thereafter, a seamed portion is cut off using a can opener. After the can lid is separated from the can barrel, a corroded state of an inner surface of the can lid is observed using a microscope, and the corrosion resistance of the can lid is evaluated. The pack test is carried out with the number of samples being set to n=50. The evaluation result is collectively shown in Table 2. Ranges where the can lid can be used as a product are indicated by "no abnormality".

The example 25 exhibits favorable evaluation results with respect to all of the feathering resistance, the openability and the pack test (corrosion resistance).

(Examples 26, 27)

Can lids are prepared in the same manner as the example 25 except for that a cationic group content of polyallylamine which is used as the cationic-group containing resin of the adhesive layer is changed to 5.0meq/g and 4.0meq/g respectively. Then, the evaluation of properties of the can lids is performed. In changing the cationic group content, the cationic group content is lowered by blocking a cationic group of polyallylamine in the example 1 with a hydrochloric acid, and the evaluation of properties is performed.

The example 26 exhibits favorable evaluation results with respect to all of the feathering resistance, the openability and the pack test (corrosion resistance). The example 27 exhibits favorable evaluation results with respect to the openability and the pack test (corrosion resistance). Although the feathering resistance is not sufficient, the feathering resistance is within an allowable range.

(Example 28)

Can lids are prepared in the same manner as the example 25 except for that polyallylamine which is used as the cationic-group containing resin of the adhesive layer is changed to polylysine ("polylysine" (product name) made by CHTSSO COROPRATION, cationic group content 7. 8meq/g) Then, the evaluation of properties of the can lids is performed. The example 28 exhibits favorable evaluation results with respect to all of the feathering resistance, the openability and the pack test (corrosion resistance).

(Example 29)

Can lids are prepared in the same manner as the example 25 except for that phenol resin which is used as the water-based resin of the adhesive layer is changed to acrylic resin ("JONCRYL70" (product name) made by Johnson Polymer Co. , Ltd.). Then, the evaluation of properties of the can lids is performed. The example 29 exhibits favorable evaluation results with respect to all of the feathering resistance, the openability and the pack test (corrosion resistance).

(Example 30)

Can lids are prepared in the same manner as the example 25 except for that phenol resin which is used as the water-based resin of the adhesive layer is changed to urethane resin ("SF820" (product name) made by Dai-ichi Kogyo Seiyaku Co., Ltd.). Then, the evaluation of properties of the can lids is performed. The example 30 exhibits favorable evaluation results with respect to all of the feathering resistance, the openability and the pack test (corrosion resistance).

(Example 31)

Can lids are prepared in the same manner as the example 25 except for that phenol resin which is used as the water-based resin of the adhesive layer is changed to polyester resin ("VYLONAL MD-1480" (product name) made by TOYOBO CO., LTD.). Then, the evaluation of properties of the can lids is performed. The example 31 exhibits favorable evaluation results with respect to all of the feathering resistance, the openability and the pack test (corrosion resistance).

(Example 32)

Can lids are prepared in the same manner as the example 25 except for that phenol resin which is used as the water-based resin of the adhesive layer is changed to epoxy resin ("Hitaloyd 7800-J21" (product name) made by Hitachi Chemical Co. , Ltd.). Then, the evaluation of properties of the can lids is performed. The example 32 exhibits favorable evaluation results with respect to all of the feathering resistance, the openability and the pack test (corrosion resistance).

(Example 33)

Can lids are prepared in the same manner as the example 25 except for that organic/inorganic chemical conversion treatment film of the surface treated layer is changed to phosphoric acid zirconium chemical conversion treatment film ("Alusurf 440" (product name) made by NIPPON PAINT Co. , Ltd.) which is an inorganic chemical conversion treatment film. Then, the evaluation of properties of the can lids is performed. With respect to film quantity, zirconium content is $15mg/m^2$, and carbon content is $0mg/m^2$. The example 33 exhibits favorable evaluation results with respect to the openability and the pack test (corrosion resistance). Although the feathering resistance is not sufficient, the feathering resistance is within an allowable range.

(Examples 34, 35, 36, 37, 38, 39, 40, 41)

Can lids are prepared in the same manner as the example 25 except for that zirconium content and carbon content based on polyitaconic acid of the surface treated layer is changed as indicated in Table 2. Then, the evaluation of properties of the can lids is performed.

Surface treatment is performed in the same manner as the example 25 except for that surface treatment solution is respectively changed in the following manner. That is, the surface treatment solution contains zirconium ion (7ppm), aluminum ion (1ppm) and effective fluorine ion (0.1ppm) in the example 34, the surface treatment solution contains zirconium ion (20ppm), aluminum ion (4ppm) and effective fluorine ion (0.4ppm) in the example 35, the surface treatment solution contains zirconium ion (10000ppm), aluminum ion (2000ppm) and effective fluorine ion (200ppm) in the example 36, and the surface treatment solution contains zirconium ion (13000ppm), aluminum ion (2700ppm) and effective fluorine ion (270ppm) in the example 37.

In the examples 38, 39, 40, and 41, surface treatment is performed in the same manner as the example 25 except for that polyitaconic acid content of the surface treatment solution is changed to (30ppm), (50ppm), (10000ppm) and (12000ppm), respectively. In the evaluation results of the examples 34, 37, 38 and 41, although the feathering resistance is not sufficient, the feathering resistance is within an allowable range as a product. Except for that, all of the examples 34, 35, 36, 37, 38, 39, 40 and 41 exhibit favorable evaluation results with respect to the openability and the pack test (corrosion resistance).

(Example 42)

Can lids are prepared in the same manner as the example 25 except for that phenol resin which is used as the water-based resin of the adhesive layer is changed to oxazoline group containing acrylic resin ("EPOCROS WS700" (product name) made by NIPPON SHOKUBAI CO., LTD.). Then, the evaluation of properties of the can lids is performed. The example 42 exhibits favorable evaluation results with respect to all of the feathering resistance, the openability and the pack test (corrosion resistance).

(Example 43)

Can lids are prepared in the same manner as the example 25 except for that phenol resin which is used as the water-based resin of the adhesive layer is changed to 1500ppm of oxazoline group containing acrylic resin ("EPOCROS WS 700" (product name) made by NIPPON SHOKUBAI CO. , LTD.) and 1500ppm of phenol resin ("BRL 141B" (product name) made by SHOWA HIGHPOLYMER CO., LTD.). Then, the evaluation of properties of the can lids is performed. The example 43 exhibits favorable evaluation results with respect to all of the feathering resistance, the openability and the pack test (corrosion resistance).

(Example 44)

Can lids are prepared in the same manner as the example 43 except for that polyallylamine which is used as the cationic-group containing resin of the adhesive layer is changed to polylysine ("polylysine" (product name) made by CHISSO COROPRATION). Then, the evaluation of properties of the can lids is performed. The example 44 exhibits favorable evaluation results with respect to all of the feathering resistance, the openability and the pack test (corrosion resistance).

(Examples 45, 46)

Can lids are prepared in the same manner as the example 25 except for that carbon content of the adhesive layer is changed to 1mg/m$^2$ and 2mg/m$^2$ respectively from 20mg/m$^2$. Then, the evaluation of properties of the can lids is performed. In changing carbon content, the post treatment agent described in the example 1 is diluted using ion exchangedwater at dilution factors of 20 times and at dilution factors of 10 times respectively so as to change the concentration of an effective component in the post treatment agent to 1/20 and 1/10 respectively. In the evaluation results of the example 45, although the feathering resistance is not sufficient, the feathering resistance is within an allowable range as a product. Except for that, both of examples 45 and 46 exhibit favorable evaluation results with respect to the openability and the pack test (corrosion resistance).

(Examples 47, 48)

Can lids are prepared in the same manner as the example 25 except for that carbon content of the adhesive layer is changed to 200mg/m$^2$ and 220mg/m$^2$ respectively from 20mg/m$^2$. Then, the evaluation of properties of the can lids is performed. In changing carbon content, the post treatment agent described in the example 1 is changed to 70000ppm of polyallylamine and 30000ppm of phenol resin in the example 47. The post treatment agent described in the example 1 is changed to 77000ppm of polyallylamine and 33000ppm of phenol resin in the example 48. In the evaluation results of the example 48, although the feathering resistance is not sufficient, the feathering resistance is within an allowable range as a product. Except for that, both of examples 47 and 48 exhibit favorable evaluation results with respect to the openability and the pack test (corrosion resistance).

(Comparison example 5)

Can lids are prepared in the same manner as the example 25 except for that polyallylamine which is used as the cationic-group containing resin of the adhesive layer is not used. Then, the evaluation of properties of the can lids is performed. The comparison example 5 exhibits unfavorable evaluation results with respect to all of the feathering resistance, the openability and the pack test (corrosion resistance).

(Comparison example 6)

Can lids are prepared in the same manner as the example 25 except for that phenol resin which is used as the water-based resin of the adhesive layer is not used. Then, the evaluation of properties of the can lids is performed. The comparison example 6 exhibits unfavorable evaluation results with respect to all of the feathering resistance, the openability and the pack test (corrosion resistance).

(Comparison example 7)

Can lids are prepared in the same manner as the example 25 except for that the surface treated layer is not used. Then, the evaluation of properties of the can lids is performed. The comparison example 7 exhibits unfavorable evaluation results with respect to all of the feathering resistance, the openability and the pack test (corrosion resistance).

(Comparison example 8)

Can lids are prepared in the same manner as the example 25 except for that the adhesive layer is not used. Then, the evaluation of properties of the can lids is performed. The comparison example 8 exhibits unfavorable evaluation results with respect to all of the feathering resistance, the openability and the pack test (corrosion resistance).
As described above, the can bodies and the can lids formed of the resin-coated metal sheets obtained by the examples sufficiently satisfy properties including adhesiveness, corrosion resistance which are requisites for the cans and can lids.
[Table 1]

[Table 1]

| | | adhesive layer | | | surface treated layer | | | evaluation (can body) | | | |
|---|---|---|---|---|---|---|---|---|---|---|---|
| | | cationic-group containing resin (cationic group content) | water-based resin | C content | treatment | Zr content | C content | resistance against delamination with flaws | impact resistance adhesivness | pack test 1 | pack test 2 |
| example | 1 | polyallylamine (17.5) | phenol resin | 20 | treatment A | 15 | 2 | Good | Good | no abnormality | no abnormality |
| | 2 | polyallylamine (5.0) | phenol resin | 20 | treatmen A | 15 | 2 | Good | Good | no abnormality | no abnormality |
| | 3 | polyallylamine (4.0) | phenol resin | 20 | treatment A | 15 | 2 | Fair | Good | no abnormality | no abnormality |
| | 4 | polylysine (7.8) | phenol resin | 20 | treatment A | 15 | 2 | Good | Good | no abnormality | no abnormality |
| | 5 | polyallylamine (17.5) | acrylic resin | 20 | treatment A | 15 | 2 | Good | Good | no abnormality | no abnormality |
| | 6 | polyallylamine (17.5) | urethane resin | 20 | treatment A | 15 | 2 | Good | Good | no abnormality | no abnormality |
| | 7 | polyallylamine (17.5) | polyester resin | 20 | treatment A | 15 | 2 | Good | Good | no abnormality | no abnormality |
| | 8 | polyallylamine (17.5) | epoxy resin | 20 | treatment A | 15 | 2 | Good | Good | no abnormality | no abnormality |
| | 9 | polyallylamine (17.5) | phenol resin | 20 | treatment B | 15 | 0 | Fair | Good | no abnormalityy | no abnormality |
| | 10 | polyallylamine (17.5) | phenol resin | 20 | treatment A | 1 | 2 | Fair | Good | no abnormality | no abnormality |
| | 11 | polyallylamine (17.5) | phenol resin | 20 | treatment A | 2 | 2 | Good | Good | no abnormality | no abnormality |
| | 12 | polyallylamine (17.5) | phenol resin | 20 | treatment A | 100 | 2 | Good | Good | no abnormality | no abnormality |
| | 13 | polyallylamine (17.5) | phenol resin | 20 | treatment A | 120 | 2 | Fair | Good | no abnormality | no abnormality |

| | | adhesive layer | | | surface treated layer | | | evaluation (can body) | | | |
|---|---|---|---|---|---|---|---|---|---|---|---|
| | | cationic-group containing resin (cationic group content) | water-based resin | C content | treatment | Zr content | C content | resistance against delamination with flaws | impact resistance adhesivness | pack test 1 | pack test 2 |
| | 14 | polyallylamine (17.5) | phenol resin | 20 | treatment A | 15 | 0.3 | Fair | Good | no abnormality | no abnormality |
| | 15 | polyallylamine (17.5) | phenol resin | 20 | treatment A | 15 | 0.5 | Good | Good | no abnormality | no abnormality |
| | 16 | polyallylamine (17.5) | phenol resin | 20 | treatment A | 15 | 20 | Good | Good | no abnormality | no abnormality |
| | 17 | polyallylamine (17.5) | phenol resin | 20 | treatment A | 15 | 22 | Fair | Good | no abnormality | no abnormality |
| | 18 | polyallylamine (17.5) | oxazoline group containing acrylic resin | 20 | treatment A | 15 | 2 | Good | Good | no abnormality | no abnormalit abnormality |
| | 19 | polyallylamine (17.5) | oxazoline group containing acrylic resin/phenol resin | 20 | treatment A | 15 | 2 | Good | Good | no abnormality | no abnormality |
| | 20 | polylysine (7.8) | oxazoline group containingg acrylic resin/phenol resin | 20 | treatment A | 15 | 2 | Good | Good | no abnormality | no abnormality |
| | 21 | polyallylamine (17.5) | phenol resin | 1 | treatment A | 15 | 2 | Fair | Good | no abnormality | no abnormality |
| | 22 | polyallylamine (17.5) | phenol resin | 2 | treatment A | 15 | 2 | Good | Good | no abnormality | no abnormality |

(continued)

| | | adhesive layer | | | surface treated layer | | | evaluation (can body) | | | |
|---|---|---|---|---|---|---|---|---|---|---|---|
| | | cationic-group containing resin (cationic group content) | water-based resin | C content | treatment | Zr content | C content | resistance against delamination with flaws | impact resistance adhesivness | pack test 1 | pack test 2 |
| | 23 | polyallylamine (17.5) | phenol resin | 200 | treatment A | 15 | 2 | Good | Good | no abnormality | no abnormality |
| | 24 | polyallylamine (17.5) | phenol resin | 220 | treatment A | 15 | 2 | Fair | Good | no abnormality | no abnormality |
| comparison example | 1 | none | phenol resin | 20 | treatment A | 15 | 2 | Bad | Bad | no abnormality | corrosion on a portion deformed by impact |
| | 2 | polyallylamine (17.5) | none | 20 | treatment A | 15 | 2 | Bad | Fair | no abnormality | corrosion on a portion deformed by impact |
| | 3 | polyallylamine (17.5) | phenol resin | 20 | none | 0 | 0 | Bad | Bad | corrosion on a neck in portion seaming portion | corrosion on a portion deformed by impact |
| | 4 | none | none | 0 | treatment A | 15 | 2 | Bad | Good | no abnormality | no abnormality |
| Surface treatment A: organic/inorganic chemical conversion treatment film (containing poly itaconic acid) | | | | | | | | | | | |
| Surface treatment B: inorganic chemical conversion treatment film (Phosphoric acid zirconium system) | | | | | | | | | | | |

[Table 2]

| | | adhesive layer | | | surface treated layer | | | evaluation (laminate EOE) | | |
|---|---|---|---|---|---|---|---|---|---|---|
| | | cationic-group containing resin (cationic group content) | water-based resin | C content | treatment | Zr content | C content | feathering evaluation | opening property evaluation | pack test |
| example | 25 | polyallylamine (17.5) | phenol resin | 20 | treatment A | 15 | 2 | Good | 0/200 | no abnormality |
| | 26 | polyallylamine (5.0) | phenol resin | 20 | treatment A | 15 | 2 | Good | 0/200 | no abnormality |
| | 27 | polyallylamine (4.0) | phenol resin | 20 | treatment A | 15 | 2 | Fair | 0/200 | no abnormality |
| | 28 | polylysine (7.8) | phenol resin | 20 | treatment A | 15 | 2 | Good | 0/200 | no abnormality |
| | 29 | polyallylamine (17.5) | acrylic resin | 20 | treatment A | 15 | 2 | Good | 0/200 | no abnormality |
| | 30 | polyallylamine (17.5) | urethane resin | 20 | treatment A | 15 | 2 | Good | 0/200 | no abnormality |
| | 31 | polyallylamine (17.5) | polyester resin | 20 | treatment A | 15 | 2 | Good | 0/200 | no abnormality |
| | 32 | polyallylamine (17.5) | epoxy resin | 20 | treatment A | 15 | 2 | Good | 0/200 | no abnormality |
| | 33 | polyallylamine (17.5) | phenol resin | 20 | treatment B | 15 | 0 | Fair | 0/200 | no abnormality |
| | 34 | polyallylamine (17.5) | phenol resin | 20 | treatment A | 1 | 2 | Fair | 0/200 | no abnormality |
| | 35 | polyallylamine (17.5) | phenol resin | 20 | treatment A | 2 | 2 | Good | 0/200 | no abnormality |
| | 36 | polyallylamine (17.5) | phenol resin | 20 | treatment A | 100 | 2 | Good | 0/200 | no abnormality |
| | 37 | polyallylamine (17.5) | phenol resin | 20 | treatment A | 120 | 2 | Fair | 0/200 | no abnormality |

EP 2 159 046 B1

26

(continued)

| | | adhesive layer | | | surface treated layer | | | evaluation (laminate EOE) | | |
|---|---|---|---|---|---|---|---|---|---|---|
| | | cationic-group containing resin (cationic group content) | water-based resin | C content | treatment | Zr content | C content | feathering evaluation | opening property evaluation | pack test |
| | 38 | polyallylamine (17.5) | phenol resin | 20 | treatment A | 15 | 0.3 | Fair | 0/200 | no abnormality |
| | 39 | polyallylamine (17.5) | phenol resin | 20 | treatment A | 15 | 0.5 | Good | 0/200 | no abnormality |
| | 40 | polyallylamine (17.5) | phenol resin | 20 | treatment A | 15 | 20 | Good | 0/200 | no abnormality |
| | 41 | polyallylamine (17.5) | phenol resin | 20 | treatment A | 15 | 22 | Fair | 0/200 | no abnormality |
| | 42 | polyallylamine (17.5) | oxazoline group containing acrylic resin | 20 | treatment A | 15 | 2 | Good | 0/200 | no abnormality |
| | 43 | polyallylamine (17.5) | oxazoline group containing acrylic resin/ phenol resin | 20 | treatment A | 15 | 2 | Good | 0/200 | no abnormality |
| | 44 | polylysine (7.8) | oxazoline group containing acrylic resin/ phenol resin | 20 | treatment A | 15 | 2 | Good | 0/200 | no abnormality |
| | 45 | polyallylamine (17.5) | phenol resin | 1 | treatment A | 15 | 2 | Fair | 0/200 | no abnormality |
| | 46 | polyallylamine (17.5) | phenol resin | 2 | treatment A | 15 | 2 | Good | 0/200 | no abnormality |
| | 47 | polyallylamine (17.5) | phenol resin | 200 | treatment A | 15 | 2 | Good | 0/200 | no abnormality |
| | 48 | polyallylamine (17.5) | phenol resin | 220 | treatment A | 15 | 2 | Fair | 0/200 | no abnormality |

EP 2 159 046 B1

(continued)

| | | adhesive layer | | | surface treated layer | | | evaluation (laminate EOE) | | |
|---|---|---|---|---|---|---|---|---|---|---|
| | | cationic-group containing resin (cationic group content) | water-based resin | C content | treatment | Zr content | C content | feathering evaluation | opening property evaluation | pack test |
| comparison example | 5 | none | phenol resin | 20 | treatment A | 15 | 2 | Bad | 3/200 | corrosion on rivet score portion |
| | 6 | polyallylamine (17.5) | none | 20 | treatment A | 15 | 2 | Bad | 1/200 | corrosion on rivet score portion |
| | 7 | polyallylamine (17.5) | phenol resin | 20 | none | 0 | 0 | Bad | 10/200 | corrosion on rivet score portion |
| | 8 | none | none | 0 | treatment A | 15 | 2 | Bad | 48/200 | corrosion on rivet score portion |
| Surface treatment A: organic/inorganic chemical conversion treatment film (containing poly itaconic acid) Surface treatment B: inorganic chemical conversion treatment film (Phosphoric acid zirconium system) | | | | | | | | | | |

The present invention provides a resin-coated metal sheet which can be used for forming can bodies or can lids of beverage cans, wherein a surface treatment layer is formed without using chromium, and the resin-coated metal sheet exhibits excellent corrosion resistance even when the resin-coated metal sheet is subject to severe forming, and excellent adhesiveness between the metal substrate and the coating material or the thermoplastic resin. In this manner, the industrial applicability of the present invention is extremely broad.

## Claims

1.  A resin-coated metal sheet having excellent corrosion resistance and excellent adhesiveness comprising:

    an aluminum substrate having a surface treatment film on at least one side thereof; and
    an organic resin film layer formed on the surface of the aluminum substrate which has the surface treatment film wherein the organic resin film layer is formed by coating by way of an adhesive layer, wherein
    the adhesive layer contains a cationic-group containing resin and a water-based resin; and
    wherein the surface treatment film is an organic/inorganic chemical conversion treatment film which includes 0.5 mg/m$^2$ to 20 mg/m$^2$ of polyitaconic acid in terms of organic carbon content derived from the polyitaconic acid.

2.  A resin-coated metal sheet according to claim 1, wherein the cationic-group containing resin contains not less than 5.0meq/g of cationic group in a resin solid content thereof.

3.  A resin-coated metal sheet according to claim 1 or 2, wherein the cationic-group containing resin is polyallylamine and/or polylysine.

4.  A resin-coated metal sheet according to any one of claims 1 to 3, wherein the water-based resin includes at least one of an acrylic resin, a urethane resin, a polyester resin, a phenol resin and an epoxy resin.

5.  A resin-coated metal sheet according to claim 4, wherein the acrylic resin is an oxazoline-group containing acrylic resin which contains at least two oxazoline-groups in one molecule thereof.

6.  A resin-coated metal sheet according to claim 1, wherein the organic/inorganic chemical conversion treatment film includes 2mg/m$^2$ to 100mg/m$^2$ of zirconium in terms of metal atoms and a polyitaconic acid.

7.  A resin-coated metal sheet according to any one of claims 1 to 6, wherein the organic resin film layer is a polyester film.

8.  A formed body **characterized by** being formed using the resin-coated metal sheet according to any one of claims 1 to 7.

9.  A formed body according to claim 8, wherein the formed body is a can body.

10. A formed body according to claim 8, wherein the formed body is a can lid.

## Patentansprüche

1.  Ein harzbeschichtetes Metallblech mit exzellenter Korrosionsbeständigkeit und exzellenter Haftfestigkeit, umfassend:

    ein Aluminiumsubstrat mit einem Oberflächenbehandlungsfilm auf mindestens einer Seite davon; und
    eine Filmschicht aus organischem Harz, die auf der Oberfläche des Aluminiumsubstrats gebildet ist, welches den Oberflächenbehandlungsfilm aufweist, wobei die Filmschicht aus organischem Harz durch Beschichten mittels einer Haftschicht gebildet wird, wobei die Haftschicht ein einen kationischen Rest enthaltendes Harz und ein auf Wasser basierendes Harz enthält; und wobei der Oberflächenbehandlungsfilm ein organischer/anorganischer chemischer Konversionsbehandlungsfilm ist, der 0,5 mg/m$^2$ bis 20 mg/m$^2$ Polyitaconsäure, bezogen auf den Gehalt an organischem Kohlenstoff, der sich von der Polyitaconsäure ableitet, enthält.

2.  Ein harzbeschichtetes Metallblech nach Anspruch 1, wobei das einen kationischen Rest enthaltende Harz nicht weniger als 5,0 meq/g an kationischem Rest bezogen auf einen Harzfeststoffgehalt davon enthält.

3. Ein harzbeschichtetes Metallblech nach Anspruch 1 oder 2, wobei das einen kationischen Rest enthaltende Harz Polyallylamin und/oder Polylysin ist.

4. Ein harzbeschichtetes Metallblech nach einem der Ansprüche 1 bis 3, wobei das auf Wasser basierende Harz mindestens eines aus einem Acrylharz, einem Urethanharz, einem Polyesterharz, einem Phenolharz und einem Epoxyharz enthält.

5. Ein harzbeschichtetes Metallblech nach Anspruch 4, wobei das Acrylharz ein Oxazolinrest enthaltendes Acrylharz ist, das mindestens zwei Oxazolinreste in einem Molekül davon enthält.

6. Ein harzbeschichtetes Metallblech nach Anspruch 1, wobei der organische/anorganische chemische Konversions-behandlungsfilm 2 mg/m$^2$ bis 100 mg/m$^2$ Zirkon, bezogen auf Metallatome und eine Polyitaconsäure, enthält.

7. Ein harzbeschichtetes Metallblech nach einem der Ansprüche 1 bis 6, wobei die Filmschicht aus organischem Harz ein Polyesterfilm ist.

8. Ein Formkörper, **dadurch gekennzeichnet, dass** er unter Verwendung des harzbeschichteten Metallblechs nach einem der Ansprüche 1 bis 7 gebildet wird.

9. Ein Formkörper nach Anspruch 8, wobei der Formkörper ein Dosenkörper ist.

10. Ein Formkörper nach Anspruch 8, wobei der Formkörper ein Dosendeckel ist.


**Revendications**

1. Feuille métallique revêtue de résine ayant une excellente résistance à la corrosion et une excellente adhésivité comprenant :

    un substrat en aluminium portant un film de traitement de surface sur au moins une de ses faces ; et une couche de film de résine organique formée sur la surface du substrat en aluminium qui porte le film de traitement de surface, la couche de film de résine organique étant formée par enduction à l'aide d'une couche adhésive, dans laquelle
    la couche adhésive contient une résine contenant des groupes cationiques et une résine aqueuse ; et dans laquelle le film de traitement de surface est un film de traitement par conversion chimique organique/inorganique qui contient 0,5 à 20 mg/m$^2$ d'acide polyitaconique en termes de teneur en carbone organique dérivé de l'acide polyitaconique.

2. Feuille métallique revêtue de résine selon la revendication 1, dans laquelle la résine contenant des groupes cationiques ne contient pas moins de 5,0 méq/g de groupe cationique dans sa teneur en fraction solide.

3. Feuille métallique revêtue de résine selon la revendication 1 ou 2, dans laquelle la résine contenant des groupes cationiques est une polyallylamine et/ou une polylysine.

4. Feuille métallique revêtue de résine selon l'une quelconque des revendications 1 à 3, dans laquelle la résine aqueuse comprend au moins une résine parmi une résine acrylique, une résine uréthanne, une résine polyester, une résine phénolique et une résine époxy.

5. Feuille métallique revêtue de résine selon la revendication 4, dans laquelle la résine acrylique est une résine acrylique contenant des groupes oxazoline qui contient au moins deux groupes oxazoline par molécule.

6. Feuille métallique revêtue de résine selon la revendication 1, dans laquelle le film de traitement par conversion chimique organique/inorganique contient 2 à 100 mg/m$^2$ de zirconium en termes d'atomes métalliques et un acide polyitaconique.

7. Feuille métallique revêtue de résine selon l'une quelconque des revendications 1 à 6, dans laquelle la couche de film de résine organique est un film polyester.

**8.** Corps formé **caractérisé en ce qu'**il est formé à l'aide de la feuille métallique revêtue de résine selon l'une quelconque des revendications 1 à 7.

**9.** Corps formé selon la revendication 8, dans lequel le corps formé est un corps de boîte métallique.

**10.** Corps formé selon la revendication 8, dans lequel le corps formé est un couvercle de boîte métallique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5125555 A
- JP 2004183015 A